Europäisches Patentamt

European Patent Office

Office européen des brevets

(11) Publication number: **0 549 154 A2**

# EUROPEAN PATENT APPLICATION

(21) Application number: **92310964.9**

(22) Date of filing: **01.12.92**

(51) Int. Cl.⁵: **G11B 20/14**, G11B 20/12, G11B 19/04

(30) Priority: **24.12.91 US 810575**

(43) Date of publication of application:
**30.06.93 Bulletin 93/26**

(84) Designated Contracting States:
**AT BE CH DE DK ES FR GB GR IE IT LI LU NL PT SE**

(71) Applicant: **ADVANCED MICRO DEVICES, INC.**
**901 Thompson Place P.O. Box 3453**
**Sunnyvale, CA 94088(US)**

(72) Inventor: **Masood, Shakeel**
**P.O. Box 71034**
**Sunnyvale, California 94086(US)**
Inventor: **Li, George**
**1381 Turnstone Way**
**Sunnyvale, California 94087(US)**

(74) Representative: **Wright, Hugh Ronald et al**
**Brookes & Martin 52/54 High Holborn**
**London WC1V 6SE (GB)**

(54) **Repetitive pattern detection.**

(57) An improved pattern detection algorithm is implemented for detecting the X3B11 Write Protect FLAG pattern in each sector of an optical data disk. Transitions in the data only between bits of a first predetermined value and bits of a second predetermined value are observed. The transitions are counted, and the FLAG pattern is identified when the transitions achieve a predetermined count within a predefined window, programmable by the user. The detection algorithm of this invention has application to repetitive data patterns other than the one described.

Rank Xerox (UK) Business Services
(3. 10 / 3.6 / 3.3. 1)

The invention relates generally to detection of repetitive data patterns, and preferably to implementation of an improved algorithm for asynchronously detecting the Write Protect FLAG pattern conforming to X3B11 specifications for optical data disks.

Optical disk media are capable of storing a considerable amount of data in the form of small marks or holes in the surface of the disk, each mark representing a bit of data. The marks, burned into the surface of the disk by a laser, are arranged along spiral tracks, each divided into a number of sectors.

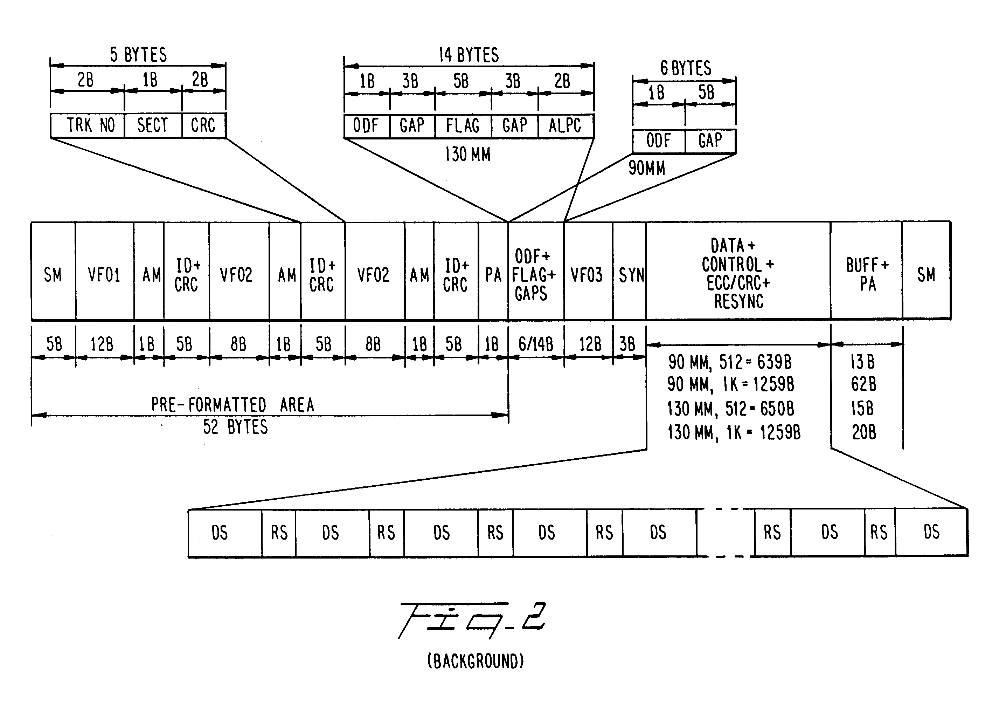

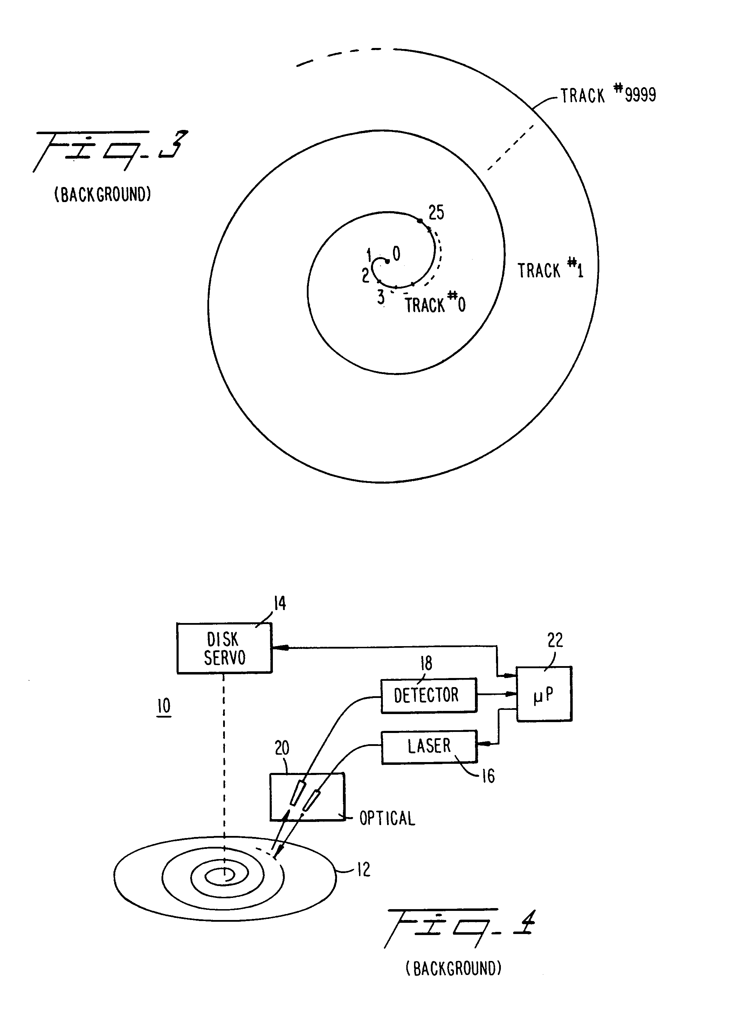

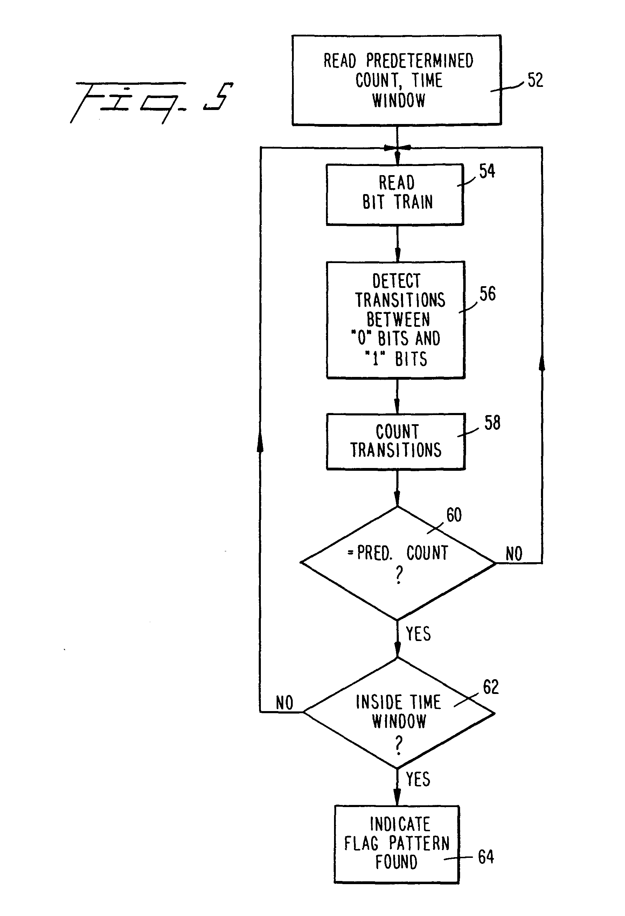

Figure 4 is a diagram of available apparatus 10 for reading data prerecorded on an optical disk 12. The disk 12 is rotated by a disk servo 14 comprising a precisely controllable DC motor. A laser 16 irradiates the surface of the disk 12, and light reflected from the disk impinges on the surface of a detector 18. An optical head 20, located between the disk 12 and laser/detector 16, 18, is positioned by another servo (not shown) to read data from a desired track. Writing is carried out using similar optics, with the optical medium being preheated to enable light from laser 16 to form surface marks corresponding to data. The servos and laser/detector are controlled by a processor unit 22.

The apparatus 10 shown in Figure 4 typically is located within a common housing, such as provided by SCSI (Small Computer System Interface) resident at a personal computer or other computer requiring storage of a large quantity of data afforded by an optical data disk represented by disk 12 in the Figure. The data storage capacity of the disk 12 is enhanced in some systems by utilizing both sides of a disk such as a 130mm (5 1/4 inch) optical disk.

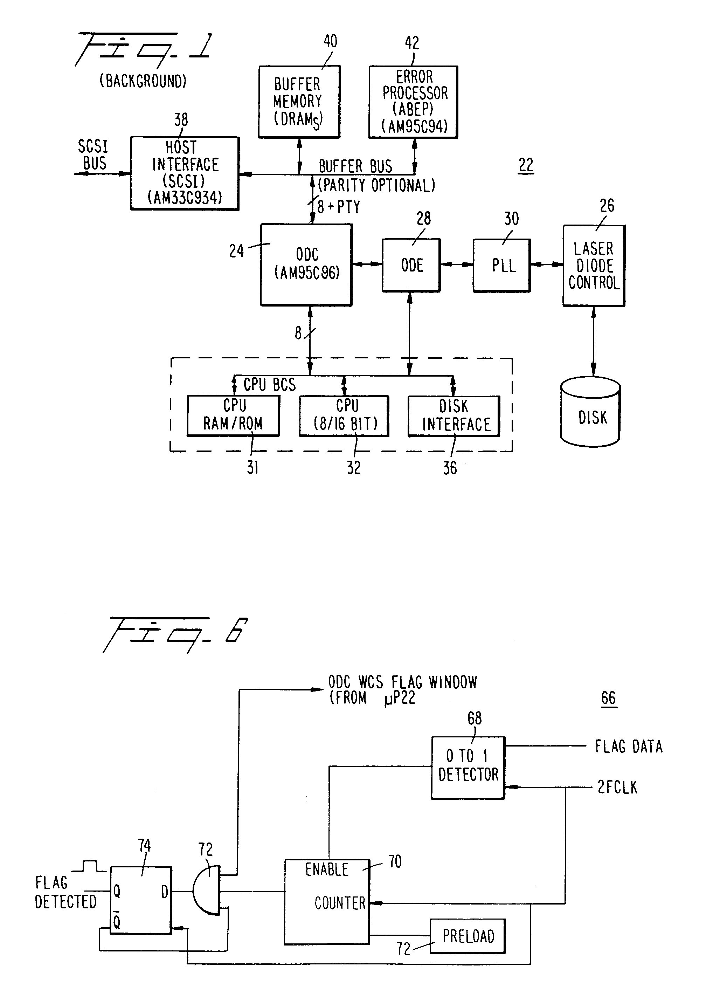

Data read and write logic, implemented by processor unit 22 in Figure 4, in practice has been carried out by commercially available integrated circuits, such as the AM95C96 optical disk controller (ODC) manufactured by Advanced Micro Devices of Sunnyvale, California. A processor unit implementing the AM95C96, shown in Figure 1, comprises an ODC 24 driving reading data through an encoder/decoder (ODE) 28 and a phase locked loop (PLL) 30 off the optical disk and writing to the optical disk. A CPU 32 controls seeking to the desired location on the disk. The ODC/ODE 24, 28 interfaces with CPU 32, a working memory 34 and a disk interface 36 to process the data signals and transfer commands for compliance with particular specifications such as the X3B11 continuous composite servo (CCS), WORM/ERASABLE optical format, developed by ANSI.

The ODC 24 is interfaced to a system bus by host interface unit 38, and is supported by a buffer memory 40 and an error processor 42. General operation of the system shown in Figure 1, being known to the prior art, is not described in detail. The invention, which concerns enhancement of ODC 24 to efficiently detect a predetermined repetitive pattern, such as the X3B11 WRITE PROTECT FLAG pattern, shall be described in detail later.

Figure 3 depicts the layout of tracks on a typical optical data disk. The tracks are arranged along a continuous spiral on the surface of the disk 12, and each turn of the spiral is treated as a separate track. In one example, the disk may be 90 mm. in diameter, and may contain 10,000 tracks (numbered 0-9999 in Figure 3), wherein each track is divided into twenty-five (25) sectors. Each sector in turn will carry 725 bytes of unformatted data. The optical disk in this example is capable of storing 181,250,000 bytes of data, or about 100,000 pages of text. Modifications include implementing more densely packed sectors, larger diameter disks and/or double-sided storage for enhanced information storage capacity.

Figure 2 is a diagram of the X3B11 data format, comprising a header area that is "pre-stamped", to establish a preformatted area, followed by a non-preformatted area including a data storage field. The third field in the non-preformatted area of the header is a FLAG field having a bit train of a special repetitive pattern. This field is available only in 130mm optical disks. It is specified as a five byte long string of bits representing continuous "pulses" having the following form (wherein sixteen bits constitute a byte):

100100100100100...........0100

This field indicates that the sector containing the FLAG pattern has already been written into, and is not available to receive further written data; hence the term "write once, read many", or WORM, is applied to identify this type of disk format. The FLAG field, as well as the other fields constituting the X3B11 format, is summarized in Table I below.

**Table I**

| NAME | FUNCTION | PATTERN |
|---|---|---|
| SM | Sector Mark | 80 channel bits (5 bytes) Special Redundant Pattern= $5\,3\,\underline{3}\,7\,\underline{3}\,3\,\underline{3}\,3\,\underline{5}$ long burn followed by 0010010010 |

=11111111111000000011111100000000000000011111100000011111100000011111111111
0010010010

| VFO1,2,3 | Lock up field for PLL | Continuous Pattern<br>VFO1 = 01001001001...010010<br>VFO2' = 10010010010...010010<br>VFO2"= 00010010010...010010<br>VFO3 = 01001001001...010010 |

Note: VFO2 varies depending on previous pattern in CRC.

| AM | Address Mark (Bit/Byte Sync)<br>16 Channel bits. (1 byte) | 0100 1000 0000 0100 |
| ID | Track No. (2 bytes)<br>Sector No.(1 byte) | High order/Low order<br>bits 7-6= ID Number (ID 0-2)<br>bit    5= 0 Reserved<br>bits 4-0= Sector Number |
| CRC | ID Field Check Bytes  (2 bytes) | CRC Polynomial seed= 1's |
| PA | Postamble (one byte) | Allows last CRC and Data byte<br>closure under  RLL (2,7) modulation |
| ODF | Offset Detection Flag (one byte) | Not written, no grooves |
| GAP | Gap (Splice) | Unformatted area |
| FLAG | Indicate Written Block | Continuous Pulse (5 byte area,<br>decision by majority)<br>1001001001001001001001001100.. |
| ALPC | Auto Laser Power Control | Blank 2 bytes zone |
| SYNC | Redundant Sync for Data<br>0100 0010 0100 0010 0010 0010 0100 0100 1000 0010 0100 1000 | Triple sync pattern |
| DATA | User Data, Control, CRC, ECC<br>and RESYNC bytes. | See *Figures 1.6 and 1.7.* |
| BUFFER | Used for RPM timing margins | Not Written area |
| RESYNC | Data Field byte sync<br>16 Channel bits (1byte) | 0010 0000 0010 0100 |

NOTE:  All bit patterns show channel code bits in RLL (2,7) modulation.

During the writing operation, the FLAG field in each sector must first be read to determine whether the sector is available for receiving new data. If the FLAG is "set", i.e., the sector is a "read only" sector, writing into it is inhibited by optical disc controller electronics.

It is necessary to detect the FLAG pattern dynamically during data writing in order to determine whether the current sector is available to receive data. This requires robust decoding of bits within each sector.

FLAG pattern decoding could be carried out by monitoring the occurrence of a complete pattern of "1" bits and "0" bits in the bit stream pattern. Such an approach would not be robust, however, because it will tend not to respond to a FLAG pattern that deviates only slightly from the specified pattern. This is troublesome, as all bits of the FLAG pattern often will not be detectable as a result of imperfections in the optical storage medium or as a result of surface dirt, etc.

The present arrangement is an implementation of an improved algorithm for detecting FLAG patterns or other repetitive patterns read from an optical data disk or found within any other train of bits. The improvement is more robust than detection algorithms of the prior art; it can identify a FLAG pattern that is valid in only portions of the bit stream and not in others. This furthermore provides variable pattern detection sensitivity so that the degree of robustness will be able to be predefined by the user.

In accordance with one aspect of the invention, detection of a repetitive pattern of bits from a bit train read out from an optical data disk is implemented by detecting transitions in the bit train only between bits of a first predetermined value and bits of a second predetermined value, counting the transitions and indicating an occurrence of the predetermined pattern when the transitions achieve a predetermined count. The pattern of bits preferably comprises the Write Protect FLAG pattern specified by X3B11 data format.

The count at which the pattern is deemed to comprise the predetermined pattern may be programmable. This enables the user to control robustness of pattern detection.

Preferably there is established a detection time window, and an occurrence of the predetermined pattern is indicated only when the predetermined count achieved by the counter is accumulated within the duration of the detection time window.

Still other objects and advantages of the present invention will become readily apparent to those skilled in this art from the following detailed description, wherein only the preferred embodiment of the invention is shown and described, simply by way of illustration of the best mode contemplated of carrying out the invention. As will be realized, the invention is capable of other and different embodiments, and its several details are capable of modifications in various obvious respects, all without departing from the invention. Accordingly, the drawing and description are to be regarded as illustrative in nature, and not as restrictive.

Brief Description of Drawings

Figure 1 is a block diagram of an optical disk controller of a type to which the FLAG pattern detection algorithm of the present invention may be applied.

Figure 2 is a diagram showing X3B11 data format utilized in the preferred embodiment.

Figure 3 is a diagram showing format of an optical data disk,

Figure 4 is a simplified diagram of an optical disk read/write system.

Figure 5 is a flow chart depicting the sequence of steps constituting the FLAG pattern detection algorithm utilized in the invention.

Figure 6 is a diagram of a FLAG pattern detection circuit in accordance with the invention.

Figure 7 is a composite waveform diagram showing the timing relationship between a FLAG pattern detection window and an optical disk sector in accordance with an aspect of the invention.

Figure 8 is a composite waveform diagram showing the timing relationship between the FLAG pattern detection window and an incoming FLAG pattern.

Detection of a repetitive pattern, such as the X3B11 WRITE PROTECT FLAG pattern, in accordance with this invention, comprises reading bits from each sector of an optical disk (Figure 4), counting transitions of bits from 0 bit value to 1 bit value, and when the count achieves a predetermined count (occurring preferably during a predefined time window), indicating detection of the FLAG pattern. This procedure is carried out by ODC 24 and ODE 28 preferably integrated into a single unit IODC, as described in US copending application S.N. 813275 entitled "Single Chip Data Controller for Optical Drives," by reference. However, implementation by the system of Figure 1 is possible as well.

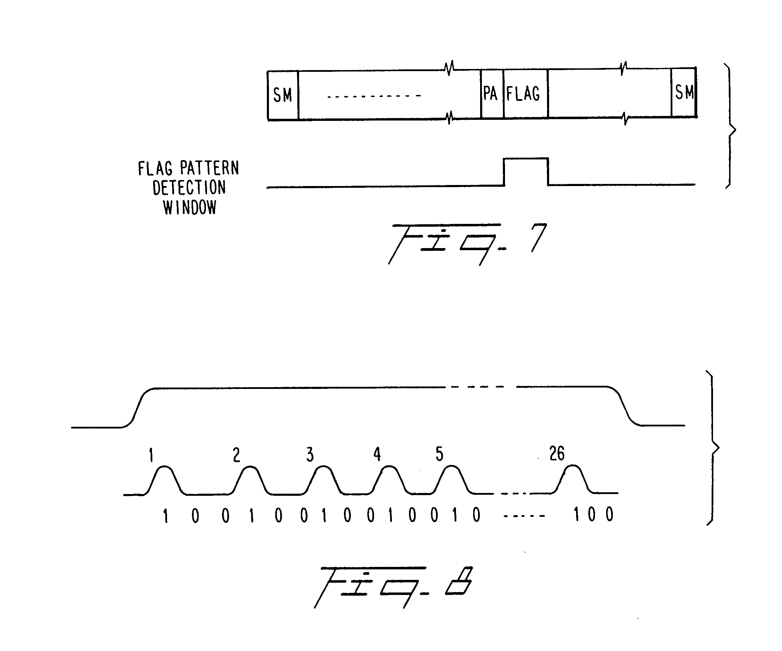

Particular methodology for implementing pattern detection in accordance with the invention will become more clear with reference to Figure 5.

Referring to Figure 5, a predetermined count, which controls the degree of robustness of the pattern detection algorithm, together with the time window within which the FLAG pattern is expected to occur, is pre-programmed. The predetermined count is programmed by the user to meet particular application requirements. For example, referring to Figure 7, assume that the X3B11 WRITE PROTECT FLAG pattern is the pattern sought to be detected. It is known based upon X3B11 specifications the FLAG pattern will appear following the ODF and GAP field and prior to the third VFO (VFO3) field in each sector. The time period within which the FLAG pattern will appear with respect to the other fields of the sector thus is predefined.

A FLAG pattern detection window shown in the lower portion of Figure 7 is generated automatically by the ODC 24 under control of CPU 32 shown in Figure 1. This defines the time during which the FLAG pattern will be read out from each sector of a disk. If a pattern of bits corresponding to the WRITE PROTECT FLAG pattern is detected during the duration of this window, the bit pattern will be accepted as being a valid FLAG pattern. If a pattern occurs outside the detection window, on the other hand, the bit pattern will not be accepted as being a valid FLAG pattern.

Figure 8 depicts in more detail the timing relationship between the FLAG pattern detection window and an incoming X3B11 FLAG pattern. A pattern 100100100....100 (5 bytes) falling within the FLAG pattern detection window will always be accepted as representing a legitimate FLAG pattern, and an appropriate "FLAG FOUND" signal will be generated. However, patterns containing bits that do not correspond precisely to X3B11 FLAG pattern specifications will not be accepted as a detected FLAG pattern.

Bits of a pattern occasionally may be obfuscated by disk surface defects or dirt, etc. Occasionally a legitimate FLAG pattern may reside in a sector even though the pattern does not conform perfectly to X3B11 specifications. Pattern detection that is not sufficiently robust will ignore legitimate FLAG patterns containing bit errors, whereas pattern detection that is excessively robust will tend to misattribute the FLAG pattern to bit patterns that depart considerably from X3B11 specifications. As an important aspect the pattern detection algorithm implemented enables the user to control the robustness with which the FLAG pattern is detected.

The improved algorithm implemented in this invention counts transitions of bits only from a first bit value (e.g., "0") to a second bit value ("1"). If the count achieves a predetermined value during a particular interval of time, the pattern is identified as being the FLAG or other particular pattern.

For example, referring to Figure 8, it is apparent that the WRITE PROTECT FLAG pattern specified by X3B11 contains 26 transitions from a value "0" to a value "1". By selecting a predetermined count of 26, the detection algorithm is perfectly accurate, that is, no bit sequence will erroneously be identified as being the FLAG pattern. However, the algorithm in this example will not be robust since legitimate FLAG patterns containing any bit defects will be rejected. On the other hand, if the predetermined count is reduced to a low value, the algorithm may become too robust, and may become prone to errors by characterizing as the FLAG patterns that do not conform to X3B11 specifications. The user will adjust the predetermined count to a value appropriate to the particular application being executed.

To ensure that pattern detection takes place only during the time interval when the FLAG pattern is specified to occur, detection preferably is restricted to the period of the FLAG pattern field by implementing a detection window. This restriction is carried out independently of the magnitude of the predetermined count. The time interval when the pattern is specified to occur can be shifted to correspond to similar patterns other than the FLAG pattern.

Referring to Figure 5, pattern detection in accordance with this invention is practiced as follows. The predetermined detection time window locations are supplied by the user by programming ODC 24 (IODC of the copending application also supplies a predetermined count) (step 52). Bits are read serially from each sector of the data disk (step 54), and transitions only between 0 bit values and 1 bit values are detected (step 56). The transitions are counted (step 58), and whether the transition count has achieved the predetermined count is determined (step 60).

If the predetermined count has not yet been achieved, steps 54-60 are repeated. If the predetermined count has been achieved, whether accumulation of the count has been made within the detection time window is next determined in step 62. If the count has not been accumulated within the window, the pattern is determined not to be the FLAG pattern. In this regard, the incoming pattern may resemble the FLAG pattern only insofar as the required number of transitions have occurred in the incoming pattern. Resemblance between the pattern read from the disk and the predetermined pattern represented by the count will be fortuitous, since the predetermined count has not occurred within the FLAG field. If step 62 determines that the count has accumulated within the window, as shown in Figure 8, the FLAG pattern is deemed to have been found and an appropriate "FLAG FOUND" signal is generated.

The sequence of steps just described is conveniently implemented in software. However, in accordance with the preferred embodiment, the FLAG pattern detection algorithm is implemented by circuitry 66 shown in Figure 6. Referring to Figure 6, incoming data (flag data coming off the disk) read from each sector of a data disk, as well as disk reference clock signals supplied by a clock source (not shown), such as a crystal controlled clock, is applied to a logic circuit 68 for detecting 0 bit value to 1 bit value transitions. Detector 68 generates a pulse, representing a "count" each time the incoming data undergoes a 0 bit value to 1 bit value transition. Persons of ordinary skill in the art are familiar with circuitry for carrying out this function. The pulses from detector 68 are supplied to a conventional count-down counter circuit 70, synchronized to the clock and preloaded to the predetermined count by the content of register 71.

When the count stored by counter 70 has down counted from the predetermined count to a count of 0 in response to 0 bit value to 1 bit value transitions of incoming data, the output of the counter supplies a signal to one input of a logic AND gate 72. Another input of gate 72 receives the FLAG pattern detection window signal shown in Figure 7 from the IODC.

The output of gate 72 is supplied to the data input D of a latch circuit 74, also synchronized to the clock. When the output of gate 72 achieves a logic 1 value, and upon receipt of the next clock signal, the Q output of latch 74 assumes a logic one value. A logic 0 value is supplied by complimentary output Q to a third input of gate 72, to disable the gate and await receipt of the next FLAG pattern.

In practice, the user will initially set the preload (predetermined count) register 71 for the counter 70 to a relatively high value, i.e., equal to or slightly less than the maximum number of transitions in the predefined pattern to be detected (26 in the X3B11 FLAG pattern of the present example). If the predefined pattern is not detected during scanning of the data disk, the user will reduce the magnitude of the preload and will scan again. This process may be repeated until the FLAG is found or presumed not to reside within the sector.

This invention provides pattern detection that is based upon a simple detection algorithm having a degree of robustness that is controllable by the user. The algorithm monitors transitions of the pattern only between a first bit value and a second, the transitions are counted and the predetermined pattern is presumed to have been found if a predetermined count is achieved. Preferably, counts are accumulated only during a detection window corresponding to the interval within which the predetermined pattern is expected to occur.

In this disclosure, there is shown and described only the preferred embodiment of the invention, but, as aforementioned, it is to be understood that the invention is capable of use in various other combinations and environments and is capable of changes or modifications within the scope of the inventive concept as expressed herein. For example, although the preferred embodiment detects the WRITE ONLY FLAG read from each sector of an optical data disk under X3B11 specifications, it should be understood that the invention is generally applicable to asynchronous detection of repetitive bit patterns for other applications.

**Claims**

1. A method of asynchronously detecting a predetermined repetitive pattern of bits within a long train of bits; comprising the steps of:
   detecting transitions in said train of bits only between bits of a first predetermined value and bits of a second predetermined value;
   counting said transitions; and
   indicating an occurrence of said predetermined pattern when said transitions achieve a predetermined count.

2. The method of claim 1, wherein said train of bits comprise bits prerecorded on the surface of an optical data disk.

3. The method of claim 2, wherein said predetermined repetitive pattern of bits comprises a FLAG pattern.

4. The method of claim 3, wherein said FLAG pattern is a Write Protect FLAG pattern specified by X3B11 format.

5. The method of claim 1, including the step of establishing a detection time window, and wherein an occurrence of said predetermined pattern is indicated only when said predetermined count is achieved within said detection time window.

6. Apparatus for asynchronously detecting a predetermined repetitive pattern of bits within a long train of bits, comprising:
   detector means responsive to said train of bits for generating an output signal upon detection of a transition in said train of bits only between bits of a first predetermined value and bits of a second predetermined value; and
   a counter circuit receiving output signals generated by said detector means and producing an output signal indicating an occurrence of the predetermined repetitive pattern of bits when said counter circuit has achieved a predetermined count.

**7.** The apparatus of claim 6, wherein said counter circuit comprises a count-down circuit preloadable to said predetermined count.

**8.** The apparatus of claim 6, wherein said predetermined repetitive pattern of bits is a FLAG pattern having X3B11 format, and further wherein said detector means comprises a zero bit to one bit detector circuit.

**9.** The apparatus of claim 6, wherein said predetermined repetitive pattern of bits includes the pattern "...xxyxxyxxyxxy...", wherein x is a bit having a particular bit value and y is a bit having the complementary bit value, and further wherein said detector means comprises a bit detector circuit for detecting a transition in said repetitive pattern of bits from a bit value x to a bit value y.

**10.** The apparatus of claim 6, wherein said the predetermined count of said counter circuit is programmable.

**11.** The apparatus of claim 6, including means for determining an occurrence of a detection time window, and wherein said counter circuit includes means for enabling generation of said output signal only when said counter has achieved said predetermined count within said detection time window.

**12.** The apparatus of claim 11, wherein said the predetermined count of said counter circuit is programmable.

**13.** The apparatus of claim 11, wherein said determining means includes a logic gate having input terminals receiving (1) a time window signal from an external signal source, (2) a clock signal from an external clock signal source and (3) said flag signal from said counter circuit, and having an output terminal, and a latching circuit having input terminals receiving (1) said flag signal from said logic circuit and (2) said clock signal, and having an output terminal for supplying said output signal.

## Fig. 1
(BACKGROUND)

```
                  ┌──────────┐ 40      ┌──────────┐ 42
                  │ BUFFER   │         │  ERROR   │
                  │ MEMORY   │         │PROCESSOR │
                  │ (DRAMs)  │         │ (ABEP)   │
                  │          │         │(AM95C94) │
                  └──────────┘         └──────────┘
          38 ┌────────────┐                              22
  SCSI       │    HOST    │                              ──
  BUS        │ INTERFACE  │     BUFFER BUS
  ───────────│   (SCSI)   │◄──(PARITY OPTIONAL)
             │ (AM33C934) │     ↕ 8+PTY
             └────────────┘
                      ┌──────────┐  28        30         26
                      │          │  ┌─────┐  ┌─────┐  ┌──────────┐
               24 ────│   ODC    │◄►│ ODE │◄►│ PLL │◄►│  LASER   │
                      │(AM95C96) │  └─────┘  └─────┘  │  DIODE   │
                      │          │                    │ CONTROL  │
                      └──────────┘                    └──────────┘
                          ↕ 8
    ┌─────────────────────────────────────────────┐
    │        CPU BCS                               │
    │   ┌────────┐   ┌────────┐   ┌──────────┐     │    ┌──────┐
    │   │  CPU   │   │  CPU   │   │  DISK    │     │    │ DISK │
    │   │RAM/ROM │   │(8/16BIT)│  │INTERFACE │     │    └──────┘
    │   └────────┘   └────────┘   └──────────┘     │
    └─────────────────────────────────────────────┘
         31            32            36
```

## Fig. 6

```
         ODC WCS FLAG WINDOW
         (FROM  µP22                              66
                                                  ──
                              ┌──────────┐ 68
                              │  0 TO 1  │────── FLAG DATA
                              │ DETECTOR │
                              └──────────┘────── 2FCLK

   74      72
  ┌───┐                ┌──────────┐ 70
FLAG   │Q    D│        │  ENABLE  │
DETECTED│     │        │          │
  │ Q̄  │        │  COUNTER │
  └───┘                └──────────┘
                              │    ┌─────────┐
                         72 ──│    │ PRELOAD │
                              └────└─────────┘
```

Fig. 2

(BACKGROUND)

EP 0 549 154 A2

Fig. 3

(BACKGROUND)

TRACK #9999

25

1   0
2
3   TRACK #0

TRACK #1

14

DISK SERVO

22

18

DETECTOR

μP

10

20

LASER

16

OPTICAL

12

Fig. 4

(BACKGROUND)

_Fig. 5_

READ PREDETERMINED COUNT, TIME WINDOW — 52

READ BIT TRAIN — 54

DETECT TRANSITIONS BETWEEN "0" BITS AND "1" BITS — 56

COUNT TRANSITIONS — 58

= PRED. COUNT ? — 60 — NO

YES

INSIDE TIME WINDOW ? — 62 — NO

YES

INDICATE FLAG PATTERN FOUND — 64

Fig. 8

1 0 0 1 0 1 0 0 1 0 0 1 0 0 1 0 ---- ---- 1 0 0
1 2 3 4 5 26

Fig. 7

FLAG PATTERN
DETECTION
WINDOW

SM — PA FLAG — SM